# EUROPEAN PATENT APPLICATION

(11) **EP 2 204 782 A1**
(43) Date of publication of application: **07.07.2010**
(21) Application number: 09175898.7
(22) Date of filing: 13.11.2009
(51) Int. Cl.: G07F 7/08, G06K 19/077

(54) **Transaction method with e-payment card and e-payment card**

(30) Priority: 31.12.2008 CN 200810242144
(71) Applicant: Shenzhen Netcom Electronics Co., Ltd., High Tech Park Shenzhen (CN)
(72) Inventor: Yang, Tianzhu, Shenzhen (CN); Li, Zhixiong, Shenzhen (CN)
(74) Representative: Gulde Hengelhaupt Ziebig & Schneider

(57) **Abstract**

The present invention discloses a transaction method with an E-payment Card and an E-payment card. The method includes the steps of: receiving transaction instructions sent from a peripheral e-equipment using communication interfaces of an E-payment card; authenticating the peripheral e-equipment's authorization of access to a storage unit of the E-payment card using a processor of the E-payment card; and if the authentication is successful, performing corresponding operation to the data in the storage unit in response to the transaction instruction by the processor of the E-payment card. The E-payment card is provided with a plurality of communication interfaces, through which it transacts with different peripheral e-equipments to be suitable for the transactions, charging, etc. in different occasions, which is more convenient for users.

## Description

### TECHNICAL FIELD

The present invention relates to storage cards and, more particularly to a transaction method with an E-payment card and an E-payment card.

### BACKGROUND

At present, storage cards typically include a CPU and a Nand type flash memory. The storage cards are generally provided with SD interfaces. To manage the data in the Nand type flash memory in the storage card, the storage card needs to be connected to a computer through a specific card reader, and thus modifies the data in the Nand type flash memory in the storage card. Thus, the traditional storage card has an SD interface only, therefore, the storage card can be operated only when it is connected to a device with an SD interface, and electronic transaction with the storage card through other interfaces can't be realized.

### SUMMARY

In accordance with an embodiment of the present invention, a transaction method with E-payment Card and an E-payment card are provided for achieving on-line electronic transaction through other interfaces. The transaction method with E-payment Card, which comprises a processor, a storage unit connected to the processor and a plurality of communication interfaces, comprises the steps of:
receiving transaction instructions sent from a peripheral e-equipment by the communication interfaces of the E-payment card; and
authenticating the peripheral e-equipment's authorization of access to the storage unit of the E-payment card using the processor of the E-payment card; and
if the authentication is successful, performing corresponding operation to data in the storage unit in response to the transaction instruction by the processor of the E-payment card.

The E-payment card comprises a plurality of communication interfaces, a processor and a storage unit. The plurality of communication interfaces is configured for receiving transaction instructions sent from a peripheral e-equipment. The processor is configured for authenticating the peripheral e-equipment's authorization of access to the storage unit of the E-payment card, and if the authentication is successful, performing corresponding operation to data in the storage unit in response to the transaction instructions. The storage unit configured for storing data.

In the embodiment of the present invention, the E-payment card is provided with a plurality of communication interfaces, through which the E-payment card transacts with different peripheral e-equipments to be suitable for the transactions, charging, etc. in different occasions, thereby providing more convenient for users.

Other objects, advantages and novel features of the present invention will become more apparent from the following detailed description when taken in conjunction with the accompanying drawings.

### BRIEF DESCRIPTION OF THE DRAWINGS

FIG. 1 is a functional block diagram of an E-payment card in accordance with an embodiment of the present invention; and

FIG. 2 is a flow chart of implement of a transaction method with the E-payment Card in accordance with the embodiment of the present invention.

### DETAILED DESCRIPTION OF THE PREFERRED EMBODIMENTS

Many aspects of the E-payment card and the transaction method can be better understood with reference to the following drawings. The components in the drawings are not necessarily to scale, the emphasis instead being placed upon clearly illustrating the principles of the present thermal interface material. Moreover, in the drawings, like reference numerals designate corresponding parts throughout the several views.

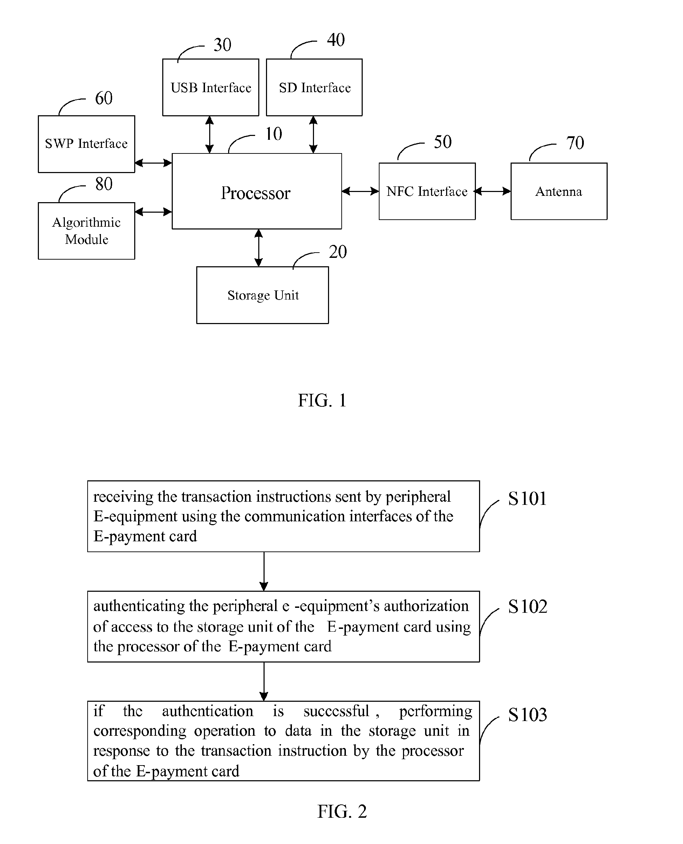

FIG. 1 shows an E-payment card in accordance with the embodiment of the present invention. The E-payment card comprises a processor 10, a storage unit 20, and a plurality of communication interfaces. The storage unit 20 and the communication interfaces are connected to the processor 10 separately.

The communication interfaces mainly comprise at least one of USB interface 30, SD interface 40, NFC interface 50, SWP interface 60, etc. The USB interface 30, the SD interface 40, the NFC interface 50 and the SWP interface 60 are connected to the processor 10 separately.

The E-payment card further comprises an antenna 70 connected to the NFC interface 50. The antenna 70 can be an NFC antenna which is connected to NFC interface 50.

The E-payment card further comprises an algorithmic module 80 connected to the processor 10. The algorithmic module 80 may be a module selected from the group consisting of: a DES algorithmic module, a 3DES algorithmic module, an AES algorithmic module, an RSA algorithmic module and a random-number generation module.

In one embodiment of the present invention, the storage unit 20 advantageously comprises a read-only storage unit and a random access storage unit. The read-only storage unit can be a nonvolatile electrically erasable storage unit.

The storage unit 20 could be used to store programs and data; and change the stored programs and data according to the actual needs. For example, the stored data could include, e.g., data in storage cards, information on bank cards, information on personal identity, keys, certificates of certification, information on data encoding and decoding, information on security verification, etc.

Different peripheral e-equipments may communicate through the corresponding communication interfaces of the E-payment card. The communication interfaces of the E-payment card receive the transaction instructions send by the peripheral e-equipment. The processor 10 of the E-payment card interprets the transaction instructions, and performing corresponding operation to the data stored in storage unit 20 in response to the interpreted transaction instructions.

FIG. 2 shows a transaction method with the E-payment card in accordance with the embodiment of the present invention. The method includes the steps of:

Step S101, receiving the transaction instructions sent by peripheral e-equipment by the communication interfaces of the E-payment card, in the embodiment of the present invention, the peripheral e-equipment could be, e.g., a computer, a POS machine, a mobile communication terminal, etc.;

Step S102, authenticating the peripheral e-equipment's authorization of access to the storage unit of the E-payment card using the processor of the E-payment card; and

Step S103, if the authentication is successful, performing corresponding operation to data in the storage unit in response to the transaction instruction by the processor of the E-payment card.

The applications of the E-payment card in accordance with the embodiment of the present invention are described below with examples.

When the E-payment card is used as a credit card, the transaction process includes the steps of:

In the final stage of shopping, i.e. in the payment stage, the cashier has input the prices of all commodities in the POS machine and calculated the total amount, and the card reader sends a transaction instruction to the E-payment card in accordance with the embodiment of the present invention through an electric field. The NFC interface of the E-payment card receives the transaction instruction, and sends the transaction instruction to the processor of the E-payment card. The processor receives the transaction instruction, and selects a bank card for payment from the storage unit of the E-payment card. At the same time, the payment password is input. The processor reads the magnetic strip information of the bank card, generates a transaction message, and finally returns the message to the POS machine through the electric field. The POS machine sends the transaction message to the payment gateway, and the payment gateway sends the message to the corresponding bank card center according to the bank card information to finish the payment.

When the E-payment card is used as an e-wallet, the transaction process includes the steps of:

The cashier inputs the transaction amount in the POS machine which will generates related transaction information. The E-payment card in accordance with the embodiment of the present invention is put near the NFC card reader connected to the POS machine. The NFC card reader initiates a communication, and the NFC card reader and the E-payment card authenticate each other. When the authentication is successful, the NFC card reader sends the transaction information to the E-payment card. The E-payment card authenticates the accuracy of the transaction information and the available balance stored in the storage unit. If the balance is adequate for the transaction, it deducts the amount from the balance. The E-payment card returns the transaction result to the NFC card reader to notify the user that the transaction is finished.

Operation process for an e-wallet transfer with the E-payment card includes the steps of:

The E-payment card is connected to a computer through the USB interface, and its value is added through the online payment system. The add-value step includes: the E-payment card is inserted in the USB interface of the computer; the E-payment card is enumerated as a standard CCID device or other private devices on the computer; the request for adding value of the E-payment card is initiated through the online payment system; the online payment system and E-payment card authenticate each other through the USB interface; when the authentication is successful, the online payment system sends a charging instruction to the E-payment card through the USB interface; the E-payment card receives the add-value instruction, modifies the balance in the built-in storage unit, and returns the transaction result; the electronic payment system processes the transaction result, and displays it for the user.

Process for managing the E-payment card includes the steps of:

The E-payment card is connected to a computer through the USB interface, and is enumerated as a standard CCID device or other private devices on the computer. The E-payment card management software installed on the computer is in operation. The E-payment card management software on the computer communicates with the processor of the E-payment card through the USB interface. After receiving the processing instruction, the processor performing the personal credential and enciphered data in the storage unit according to certain authorization, thus realizes E-payment card management.

Transaction process for remote E-payment with the E-payment card includes the steps of:

This is a mode of data interchange through the connection between a mobile communication terminal (such as a mobile phone) and the SWP interface or SD interface of the E-payment card. In this mode, the user inputs the transaction ticket number in the transaction program of the mobile phone which writes the transaction ticket number in the E-payment card through the SWP interface or SD interface of the E-payment card according to certain rules. The processor of the E-payment card reads the identity authentication information in the storage unit. The operation result is returned to the processor of the E-payment card, and finally the information is reflected to the cashier via the transaction program of the mobile phone or directly delivered to the payment gateway through the network to finish the payment.

From the above, the E-payment card in the embodiment of the present invention is provided with a plurality of communication interfaces, through which the E-payment card transacts with different peripheral e-equipments to be suitable for the transactions, charging, etc. in different occasions, thereby providing more convenient for users.

It is believed that the present embodiments and their advantages will be understood from the foregoing description, and it will be apparent that various changes may be made thereto without departing from the spirit and scope of the invention or sacrificing all of its material advantages, the examples hereinbefore described merely being preferred or exemplary embodiments of the invention.

## Claims

1. A transaction method with an E-payment card, the E-payment card comprising a processor, a storage unit connected to the processor and a plurality of communication interfaces; the transaction method comprising the steps of:
receiving transaction instructions sent from a peripheral e-equipment by the communication interfaces of the E-payment card;
authenticating the peripheral e-equipment's authorization of access to the storage unit of the E-payment card using the processor of the E-payment card; and
if the authentication is successful, performing corresponding operation to data in the storage unit in response to the transaction instruction by the processor of the E-payment card.

2. The method of claim 1, wherein the peripheral e-equipment is one of a computer, a POS machine and a mobile communication terminal.

3. The method of claim 1, wherein the communication interfaces of the E-payment card comprise at least one of USB interface(s), SD interface(s), NFC interface(s) and SWP interface(s).

4. The method of claim 1, wherein when the transaction instruction is an add-value instruction, the step of performing corresponding operation to data in the storage unit comprises:
performing an add-value operation to an amount data in the storage unit.

5. The method of claim 1, wherein when the transaction instruction is a devaluation instruction, the step of performing corresponding operation to data in the storage unit comprises:
performing a devaluation operation to an amount data in the storage unit.

6. An E-payment card comprising:
a plurality of communication interfaces configured for receiving transaction instructions sent from a peripheral e-equipment;
a processor configured for authenticating the peripheral e-equipment's authorization of access to the storage unit of the E-payment card, the processor being further configured for performing corresponding operation to data in the storage unit in response to the transaction instruction if the authentication is successful; and
a storage unit configured for storing data.

7. The E-payment card of claim 6, wherein the peripheral e-equipment is one of a computer, a POS machine and a mobile communication terminal.

8. The E-payment card of claim 6, wherein the communication interfaces of the E-payment card comprise at least one of USB interface(s), SD interface(s), NFC interface(s) and SWP interface(s).

9. The E-payment card of claim 6, further comprising an algorithmic module connected to the processor.

10. The E-payment card of claim 9, wherein the algorithmic module is a module selected from the group consisting of: a DES algorithmic module, a 3DES algorithmic module, an AES algorithmic module and an RSA algorithmic module.
